Europäisches Patentamt

European Patent Office

Office européen des brevets

(11) Publication number: **0 033 166**
A2

# EUROPEAN PATENT APPLICATION

(21) Application number: **81101802.7**

(22) Date of filing: **11.03.81**

(51) Int. Cl.³: **B 01 J 16/00**
B 01 F 1/00, B 01 F 7/16
B 01 D 19/02, C 01 B 25/223

(30) Priority: 29.12.77 US 865556
05.01.78 US 866990
05.01.78 US 866989
05.01.78 US 866988
05.01.78 US 866987
06.01.78 US 867556
26.05.78 US 909896

(43) Date of publication of application:
05.08.81 Bulletin 81/31

(84) Designated Contracting States:
BE DE FR IT NL

(60) Publication number of the earlier application
in accordance with Art. EPC: **0 003 266**

(71) Applicant: Occidental Petroleum Corporation
10989 Wilshire Boulevard
Los Angeles California 90024(US)

(72) Inventor: Ore, Fernando N.
14732 Glenn Drive
Whittier California 90602(US)

(72) Inventor: Ellis, John David
7311 Mast Drive
Huntingdon Beach California 92648(US)

(72) Inventor: Moore, James Harold
1294 Ruggles
La Verne California 91750(US)

(72) Inventor: Gragg, Fredrick Michael
2040 Benbow Place
Riverside California 92506(US)

(72) Inventor: Adams, Allen Salter
1418 Fieldcrest Drive
Jasper Florida 32052(US)

(72) Inventor: Self, James
P.O. Box 300
White Springs Florida 32096(US)

(72) Inventor: Caesar, Michael Brian
1326 Bali
Lake City Florida 32055(US)

(74) Representative: Jack, Bruce James et al,
FORRESTER & BOEHMERT Widenmayerstrasse 5 IV
D-8000 Munchen 22(DE)

(54) Apparatus for reacting or dissolving a particulate solid and a liquid; apparatus and process for the production of phosphoric acid.

(57) Apparatus which is especially suitable for use in production of phosphoric acid comprises a closed vessel (16) including a draft tube (20) mounted vertically within the vessel. A feed slurry is introduced via an inlet (12) which is provided with a vent pipe (5) for venting gases from the vessel during reaction therein, thereby reducing foaming and preventing blockage of the inlet.

The vessel may form part of a multi vessel system for production of phosphoric acid.

./...

Fig 4

"Production of Phosphoric Acid, like
processes and apparatus"

This invention concerns processes and apparatus for contacting a particulate solid with a liquid for the purpose of dissolution and/or reaction and although in certain of its broadest aspects the invention has general applicability to such processes and the apparatus used therein, the invention is especially applicable to, and has great advantages in connection with, wet processes for the production of phosphoric acid involving the dissolution and reaction of phosphate rock in an acid. Accordingly the invention will be discussed and described herein in relation to such applications thereof.

Phosphoric acid has been prepared by the wet process for many years. The wet process involves the reaction of phosphatic solid materials, herein termed phosphate rock, in a reaction mass that usually comprises calcium sulphate, monocalcium phosphate, phosphoric acid and sulphuric acid. Three variants of the process are usually designated by the names of forms of the by-product calcium sulphate produced; namely, the gypsum or dihydrate process, the hemi-hydrate process, and the anhydrite process. In all such processes the present invention can be useful in the reaction of phosphoric acid and phosphate rock. The type of by-product is mainly dependent upon the temperature of the system and the $P_2O_5$ concentration of the liquid phase of the slurry. Other factors such as fluorine concentration, alumina concentration, and sulphuric acid concentration play a less important role.

As is frequently illustrated by composition diagrams (plotting temperature versus acid strength), gypsum, ($CaSO_4$, $2H_2O$) is the by-product formed when the wet process is run at a temperature of about $90^\circ C$ or less and a $P_2O_5$ concentration of up to about 30% in the liquid portion of the slurry. With the temperature within the range about $80^\circ$ to about $120^\circ C$ and the $P_2O_5$ concentration about 40% in the liquid phase, the hemihydrate, $CaSO_4.\frac{1}{2}H_2O$ is the by-product. Adjusting the temperature and the concentrations, for instance, to $75^\circ C$ and 40% $P_2O_5$ results in a mixture of gypsum and hemihydrate which is very unstable. An unstable system such as this causes trouble during filtration owing to the hardening or setting up of the gypsum-hemihydrate solid on the filter. Care must be exercised in maintaining the proper temperature and $P_2O_5$ concentrations in the process being run in order to avoid such problems. $CaSO_4$ anhydrite is produced at temperatures of about $130^\circ C$ and $P_2O_5$ concentrations greater than 30%. This latter process is most difficult to run owing to severe corrosion at the higher temperatures and the instability of the anhydrite during processing.

The present invention is particularly useful in the manufacture of phosphoric acid by the hemihydrate, or as it is sometimes called, the semihydrate, variant of the wet process. Some aspects of our preferred method of practising the hemihydrate process are also the subject of other patents and applications in our name, in various countries, one such patent being Belgian Patent 856582. Generally, our preferred method comprises adding phosphate rock and phosphoric acid (which can contain sulphuric
acid and is preferably pre-mixed in a separate slurry tank) ~~========~~ to a first reaction vessel or set of reactors, in parallel or series, (the "dissolver") which contains a first slurry comprising calcium sulphate hemihydrate, monocalcium phosphate, and phosphoric acid. The "soluble" or "excess" sulphate content (i.e., the excess or deficiency of sulfate ions over calcium ions) of the first slurry in the first reaction vessel can be maintained (e.g. by addition of sulphuric acid) at a concentration of about +0.7% to about -4% or even -8% (more preferred 0.0 to -6%), as determined for example, by the well-known gravimetric analysis. It is more preferred to be at a negative sulphate (e.g. excess Ca+2). The sulphuric acid in the first (dissolver) vessel is usually contained in "recycle" phosphoric acid from a filtration step and/or sulphuric acid contained in a side stream or recycle slurry from the second reaction vessel. When two dissolver vessels are used in series, we prefer to operate the system in such manner that slurry from the second vessel (which has an excess of $Ca^{+2}$, therefore, no free sulphuric acid) is used as the dissolution medium in the first dissolver vessel (e.g., the first vessel would be at about -6% $SO_4$ and the second vessel at about -4%, caused by addition of sulphuric acid only to the second vessel).

Sulphuric acid is added to the second reaction vessel which contains a second slurry comprising calcium sulphate hemihydrate, monocalcium phosphate, sulphuric acid and phosphoric acid. The sulphuric acid reacts with the monocalcium phosphate and any residual, undissolved phosphate rock, producing calcium sulphate hemihydrate and phosphoric acid. The soluble or excess sulphate concentration of the second slurry is maintained at a positive value (about +0.7% to about +4.5%).

Sulphuric acid is added in amounts such that the sulphate content of the added acid and the sulphate content of the added rock is equivalent to about 90% to about 100% (more preferred 93 - 99.5%) of the stoichiometric amount of sulphate required to react with calcium added in the phosphate rock to form calcium sulphate hemihydrate.

As is well-known in the art, sulphate and/or sulphuric acid can be introduced into the system as such or as a part of a phosphoric acid "recycle" (as from the filtrate from filtering to separate the hemihydrate).

In order to maintain the desired soluble sulphate concentration in the first reaction vessel and in the second reaction vessel, circulation between the two reaction vessels is initiated. A first portion of the first slurry from the first reaction vessel is circulated through a first conduit into the second reaction vessel, and a first portion of the second slurry from the second reaction vessel is circulated through a second conduit into the first reaction vessel. This circulation is continuous. In order to better disperse the added phosphate rock and the added sulphuric acid within the slurry of the first and the second reaction vessels respectively and to better disperse the incoming slurry with the slurry present in the given reaction vessel, a second portion of the first slurry and a second portion of the second slurry is circulated within the first and second reaction vessels, respectively, preferably each through its own draft tube and preferably at a rate equal to at least 50% of the volume of the slurry in a given reaction vessel per minute. This inter-and intra-vessel circulation disperses the reactants within the slurry in the respective reaction vessels. A third portion of the second slurry is removed from the reaction system so as to separate the liquid and solid components from the said slurry.

Especially preferred is the use of an additional vessel as a slurry tank, into which phosphoric acid (which can be a filtrate, usually containing in the range of 0.5 - 3.5% sulphuric acid) and phosphate rock are contacted to form a slurry which is transported (as by an overflow pipe) to the dissolver vessel. In such a slurry tank, as in the dissolver, it is frequently useful to add a defoaming agent. A preferred defoaming agent comprises tall oil, tall oil fatty acids, or lower alkyl esters of tall oil fatty acids, or mixtures of such tall oil acids and esters, because such tall oil additives can also function (alone or with added sulphonics) as a crystal modifier The preferred esters are the methyl and ethyl (as exemplified by the esters found in the commercial product marketed under the trade name AZ-10-A).

Excessive foaming may cause blockage of the inlet for reactants, especially in closed vessels, and thus lead to reduced flow. The present invention is directed towards alleviating this problem.

Thus in one aspect the invention provides apparatus for reacting or dissolving a particulate solid and a liquid, which apparatus comprises a closed vessel, a draft tube mounted in a vertical position within the vessel, an agitator positioned within the draft tube, and an inlet for introducing a feed slurry into the vessel, characterised by a vent pipe connected to the inlet to reduce foaming generated by reaction in the vessel and to prevent blockage of or increase flow through the inlet.

In order to prevent appreciable settling of solids within the vessel or to resuspend settled solids following a shutdown, pressurised fluid may be injected to a bottom portion of the vessel. This further fluid agitation is the subject of our copending published application 3266.

In the present invention, the draft tube preferably has an outwardly flared lower skirt portion terminating in the bottom portion of the vessel and the lower end wall of the vessel is preferably downwardly dished.

Preferably the inlet comprises a conduit the lower end of which terminates within the draft tube.

The inlet may comprise a conduit having an elongate portion extending downwardly within the vessel, an
upper vent portion disposed externally of the vessel and
an inlet portion connected to the upper portion and
through which slurry is fed.

Desirably the elongate portion and the upper vent
portion of the conduit both extend substantially vertically,
the inlet portion being connected at an angle to the
upper portion.

The apparatus may include an overflow pipe extending from an upper portion of the vessel, and a recycle
slurry pipe extending into the vessel and terminating
between the outer wall of the draft tube and the inner
wall of the vessel, adjacent the lower end portion of
the draft tube.

Another problem that arises in many solid/liquid
contact processes is that of foaming of the mass in a
vessel in which the contact takes place. This problem
is especially prevalent in wet processes for phosphoric
acid manufacture. Thus an inlet is preferably provided
for introducing a treating or defoaming agent into the
vessel.

The vessel may comprise a first vessel in a
multi vessel apparatus for the preparation of phosphoric
acid by the wet process and in which slurry is continuously
circulated between and within the vessels.

Another aspect of the invention provides apparatus
for the preparation of phosphoric acid from phosphate
rock and sulphuric acid, comprising first and second
reaction vessels, each of the vessels having an agitator
positioned within a respective upright draft tube mounted
within each respective vessel, characterised by an inlet
for introducing reactants comprising phosphate rock and
phosphoric acid to the first reaction vessel, the inlet
including vent means to permit escape of gases from the
first reaction vessel and to reduce foaming generated by
reaction in the first reaction vessel, means for introducing sulphuric acid into the second reaction vessel, means for maintaining continuous circulation of slurry between the first and second reaction vessels, and means for withdrawing a slurry containing phosphoric acid and calcium sulphate from the second reaction vessel.

The means for maintaining circulation of slurry in the first and second vessels preferably comprise a draft tube mounted each of said vessels and an agitator located within each draft tube such that on actuation of each agitator slurry in each of said vessels will flow from a bottom portion of the respective draft tube, up through the draft tube and downwardly in the space between said draft tube and the adjacent inner wall of the vessel.

There may be means for applying a vacuum to said second reaction vessel to permit control of temperature in said second reaction vessel and to permit the formation of a vacuum seal between said first and second reaction vessels.

The apparatus may include a third reslurry vessel for reslurrying phosphate rock and recycle phosphoric acid, and means interconnecting said third vessel with said inlet to said first reaction vessel.

Conveniently, said first vessel is a dissolver vessel for dissolving phosphate rock in said first slurry, said second reaction vessel being cooled by evaporation and functioning as a crystallizer vessel for crystallizing calcium sulphate in said second slurry, and the apparatus includes a fourth filter feed vessel, means for conducting slurry withdrawn from said second reaction vessel to said fourth vessel, and an agitator in said fourth filter feed vessel for maintaining the slurry therein in suspension.

The apparatus may further include means for conducting slurry from said fourth filter feed vessel to filter means arranged to filter crystalline calcium sulphate from said slurry, and means for conducting filtrate containing phosphoric acid from said filter means to said third vessel.

Other features of preferred embodiments of apparatus embodying the invention will appear hereinafter.

The invention also provides a process for the preparation of phosphoric acid from phosphate rock and sulphuric acid, comprising adding phosphate rock and phosphoric acid to a first reaction vessel containing a first slurry comprising calcium sulphate, monocalcium phosphate and phosphoric, whereby the added phosphate rock is substantially converted to monocalcium phosphate calcium sulphate and phosphoric acid continually circulating the first slurry within the first reaction vessel by means of a mechanical agitator disposed within a draft tube, adding sulphuric acid to react with the monocalcium phosphate to form calcium sulphate and phosphoric acid, and separating at least a portion of the product so formed into a liquid component comprising phosphoric acid and a solid component comprising calcium sulphate, characterised in that gases are permitted to escape from the first reaction vessel through venting means thereby reducing foaming generated by reaction in the first vessel, in that a portion of the first slurry from the first vessel is continually transferred from the first vessel to a second reaction vessel containing a second slurry comprising calcium sulphate, monocalcium phosphate, sulphuric acid and phosphoric acid, in that the sulphuric acid is added to the second vessel and continuous circulation is maintained of the second slurry within the second vessel, and in that a portion of the slurry in the second vessel is continually transferred from the second vessel to the first vessel.

Another problem encountered in the operation of wet process plant for the production of phosphoric acid is that of starting up the process in a controlled and effective manner that avoids the production of unwanted by-products and their deleterious effect upon the continuous operation of the plant. This problem is especially troublesome in multi-vessel systems to which the above discussed aspects of the invention are particularly applicable.

Thus the process preferably comprises the initial steps of substantially filling at least first and second vessels with phosphoric acid at a temperature in the range of 165 to 215°F (74 to 102°C) and having a $P_2O_5$ analysis in the range of about 28 to about 38% by weight; circulating a portion of said acid from said first vessel to said second vessel; feeding phosphate rock to a third vessel that communicates with said first reaction vessel; cycling fluid from said first and second vessels to a fourth vessel as the volume of the fluid increases by reaction and foam formation; recycling said fluid from said fourth vessel to said third vessel; adding sulphuric acid to said second vessel to cause precipitation of calcium sulphate whereby the phosphoric acid strength is increased to within the range about 36 to about 42% $P_2O_5$ by weight and the solids content in said slurry is in the range of about 25 to 35%; transporting said slurry from the second vessel and containing in the range of 25 to 35% solids to a separation section where phosphoric acid is separated from the calcium sulphate; and recycling a portion of said separated phosphoric acid to said third vessel.

Preferred embodiments of the invention will now be described, by way of example, with reference to the accompanying drawings in which:

FIGURE 1 is a schematic perspective view of one preferred embodiment of apparatus for the preparation of phosphoric acid by the wet process;

FIGURE 2 is a schematic sectional view of an alternative embodiment of apparatus for the preparation of phosphoric acid by the wet process;

FIGURE 3 is a schematic sectional view of the apparatus of Figure 1 with certain components omitted in the interest of clarity;

FIGURE 4 is a vertical section of a vessel of the apparatus of Figures 1 and 3, and

FIGURE 5 is a schematic sectional view of a further embodiment of apparatus for the preparation of phosphoric acid by the wet process and incorporating two dissolver vessels in series.

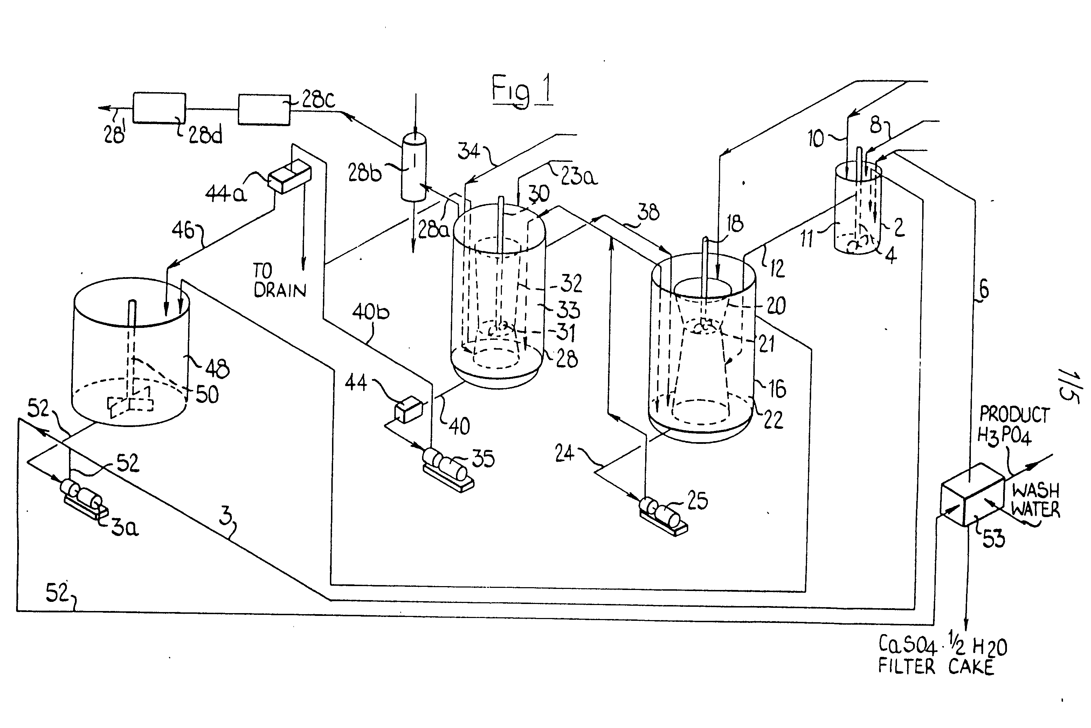

Referring to the drawings, the apparatus for the preparation of phosphoric acid illustrated in Figures 1, 3 and 4 comprises a vessel 2 having an agitator 4, phosphoric acid at about $70^{\circ}C$ being fed to the vessel 2 through conduit 6 and phosphate rock, either calcined or uncalcined, being fed to the vessel through conduit 8. Either ground or unground phosphate rock can be used. For example, phosphate rock of 90% of -200 U.S. Standard mesh can be used, but the preferred rock is about 95% of +100 U.S. Standard mesh, containing at least 32% $P_2O_5$. Rock containing less than 32% $P_2O_5$ is acceptable, and can be employed in this process. High alumina phosphate pebble may also be used.

For the hemihydrate process, the phosphate rock is slurried in phosphoric acid that preferably contains from about 20% to about 40% $P_2O_5$. Phosphoric acid, recycled from the separation section, to be discussed later, and containing from about 20% to about 40% $P_2O_5$ (and usually some sulphuric acid) is usually used in the process. When the phosphoric acid is recycled from the separation section it will usually contain from about 0.5% to about 3.5% sulphuric acid by weight. Phosphoric acid from other sources, such as other phosphate plants, merchant grade acid may also be used.

The temperature of the resultant slurry 11 so formed in the vessel 2 is about 92°C and the solids content is from about 30% to about 40% by weight.

Defoamer can be added to vessel 2 as needed through conduit 10 that is preferably of much greater height and/or diameter than is required for introduction of the defoamer and can thus·additionally function as a vent, greatly reducing foaming in the slurry and, in some cases, possibly eliminating the need for the use of a defoamer in vessel 2. Suitable defoamers include tall oil, tall oil fatty acids, alkyl esters and part esters of tall oil fatty acids (especially methyl and ethyl esters), sulphated tall oil fatty acids, tall oil rosin, alkoxide adducted tall oil rosin, oleic acid, sulphated oleic acid, silicones, reaction products of amines and carboxylic acids and mixtures of two or more of such defoamers. One preferred defoamer is the mixture of methyl esters of tall oil fatty acid and tall oil fatty acids known by the trade name "AZ 10A", this product also functioning as a crystal modifier.

The amount of the defoamer used is preferably from about 0.01% to about 0.3% (typically 0.04 to 0.1) by weight based on the weight of the slurry transferred to the separation section (or about 0.05% to 1.5% based on $P_2O_5$ produced by the process).

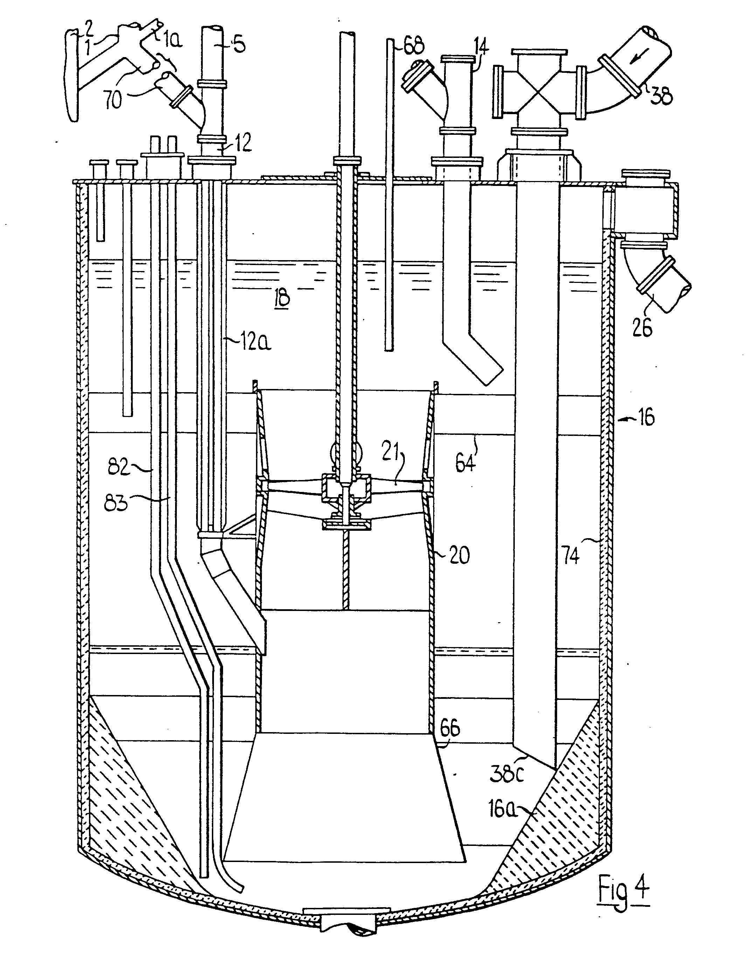

Slurry 11 is transferred through a conduit 12 to a first reaction vessel, or dissolver, 16. Vessel 16 is fitted with an agitator comprising a shaft 18 and a propeller 21 attached to the bottom thereof, and a draft tube 20 which is secured to the inside wall of vessel 16 by braces 64 (Figure 4). The vessel 16 contains a first slurry 22 which is composed of calcium sulphate, monocalcium phosphate, phosphoric acid, and sulphuric acid.

The propeller 21 of the agitator is so positioned with respect to the location of the draft tube 20 that on actuation of the shaft 18 and propeller 21 by a motor (not shown), slurry 22 in vessel 16 will flow from the bottom portion of the draft tube 20 up through the draft tube. On exiting the top of the draft tube, slurry 22 will flow downwardly in the space between the draft tube 20 and the inside walls of vessel 16. Alternatively, the propeller blade can be positioned closer to the bottom of the draft tube and, if desired, the flow can be reversed (i.e., to flow upwardly in the space between the draft tube and the inside walls).

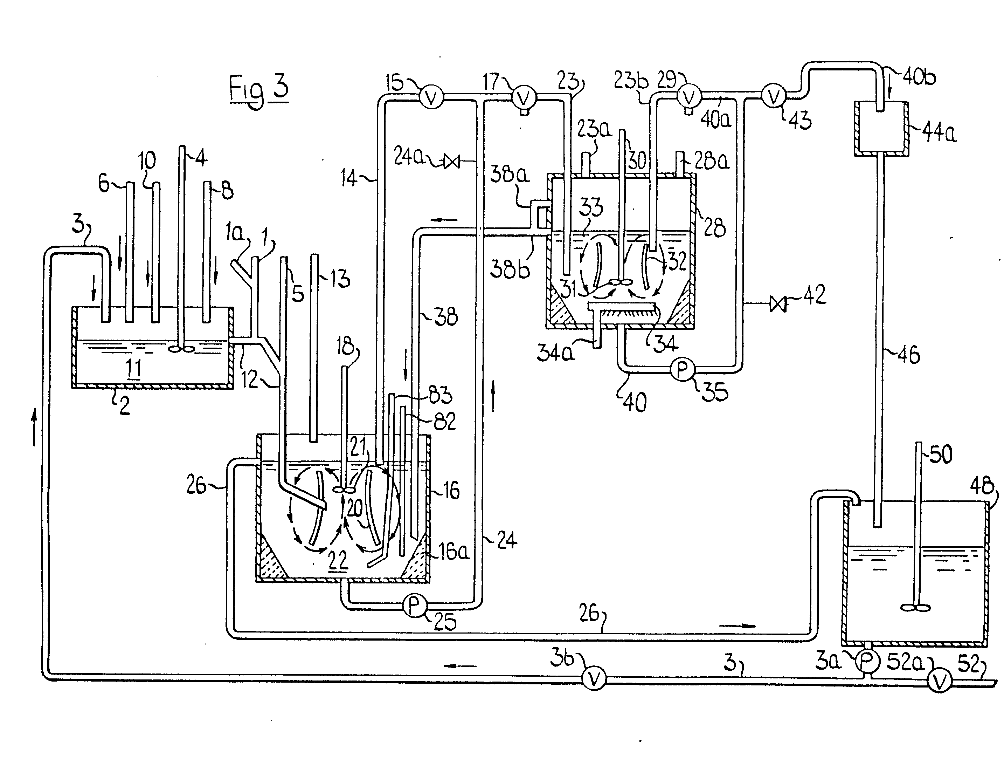

A body of slurry 33 is maintained in a second reaction vessel or crystallizer, 28. A first portion of the slurry 33 is continually withdrawn and transferred to the vessel 16 through a second, overflow conduit 38 having upper and lower connections 38a, 38b to the vessel 28, while a portion of the slurry 22 in the vessel 16 is continually withdrawn and transferred to the vessel 28 through conduits 23 (Figure 3) and 24. In the arrangement depicted, the vessel 28 is vertically offset above the vessel 16 and pump 25 is used to transfer slurry from vessel 16. However, the vessels 16 and 28 may be on the same level. Samples for analysis of the first slurry are removed from sample ports 24a in conduit 24.

Slurry 22 is maintained at a suitable temperature and soluble sulphate value selected according to the desired form of the calcium sulphate product, a temperature ranging from about $66^{\circ}C$ to about $113^{\circ}C$ and a soluble sulphate value ranging from about +0.7 to about -4% (preferably below about 0.0%) being suitable for formation of hemihydrate.

The vessel 28 is equipped with an agitator comprising shaft 30 and propeller 31, a draft tube 32 and a sulphuric acid inlet sparger 34 with inlet 34a (Figure 3). Draft tube 32 is secured to the inside wall of vessel 28 by braces (not shown). Sulphuric acid, conveniently from about 89% to 99% $H_2SO_4$, and typically about 98% $H_2SO_4$, is added from the sulphuric acid inlet 34 to be thoroughly dispersed into slurry 33, along with the slurry from conduit 24. A crystal modifier, usually a derivative of a tall oil or of an organic sulphonic acid, preferably a salt, may be added to vessel 28 through another inlet 23a. The crystal modifier can also be added to the first reaction vessel. A preferred crystal modifier is selected from alkyl, aryl, alkylaryl, and alicyclic derivates of sulphonic and sulphuric acids in which the organic radical contains from about 12 to about 30 carbon atoms. The free acid, salts thereof and mixtures of the free acid and salts may be used. The preferred salts include those of alkali metals, ammonia and alkyl, aryl or alkylaryl amines (e.g. trimethyl amine, diethyl amine, monopropyl amine). Polymeric sulphonates and sulphates can also be employed. Examples of crystal modifiers which can be employed in the present process are alkyl sulphonic acids containing from about 12 to about 30 carbon atoms, benzenesulphonic acid, alkylbenzenesulphonic acid in which the alkyl group contains from about 8 to 20 carbon atoms, alkylcyclohexane sulphonic acid in which the alkyl group contains from about 8 to 20 carbon atoms, polymeric sulphonates and sulphates such as polystyrene sulphonate, and polyvinylsulphonate, said polymeric material having a molecular weight of from about 500 to about 1,000,000. The organic sulphonic acid can be an alkyl-,aryl-,or an alkylaryl - sulphonic acid or a sulphated derivative of a carboxylic acid or an alkalimetal, amine or ammonium salt thereof.

For example, tetradecylsulphonic acid, benzenesulphonic acid isooctylbenzene sulphonic acid and sulphated oleic acid may be used as crystal modifiers in this process. Mixtures of two or more modifiers are also useful. The crystal modifier is added for the purpose of increasing the growth of the calcium sulphate, e.g. hemihydrate, crystals formed in the system. The preferred salts include those of sodium, potassium, ammonia and primary, secondary and tertiary alkyl amines containing from 1 to about 30 carbon atoms. Preferably, the modifier as described above, is present at a level of about 1 to 1000 ppm (usually 5 to 500 ppm) based on the weight of slurry to the separation section. Preferably, the levels of modifier and of defoamer are kept as low as possible (while maintaining good filterability).

Phosphoric acid, if needed, can be also added to the second slurry within the second reaction vessel.

Activation of the agitator by means of a motor (not shown) causes a flow of slurry 33 from the bottom of the draft tube 32 up through the draft tube and out the top portion of said draft tube. On exiting the top of the draft tube 32, the slurry flows downwardly in the space between the draft tube 32 and the inside walls of vessel 28. The circulation thus established within vessel 28 not only disperses slurry 22 and sulphuric acid in slurry 33, but also constantly renews the surface of the slurry 33.

Vessel 28 is connected to a vacuum pump 28' (Figure 1) and is subjected to a subatmospheric pressure ranging from about 2 inches ( 50 mm) of mercury to about 29 inches (740 mm) of mercury absolute, so that water is evaporated from the hot slurry, thus cooling the slurry and also forming a vacuum seal between the first and second reaction vessels. In addition to water, other volatile materials produced by the reaction of sulphuric acid and phosphate rock are also removed. These materials include HF, $SiF_4$, $H_2S$, $SO_2$, $CO_2$.

Because of the internal circulation of the slurry within vessel 28 temperature gradients are minimised, the slurry 33 being maintain at a suitable temperature, e.g. ranging from about $66^{o}C$ to about $113^{o}C$, preferably from about $80^{o}C$ to about $105^{o}C$, for the hemihydrate process and having a suitable sulphate content, e.g. ranging from about +0.7 to about +4.5% for the hemihydrate process.

The portion of slurry 33 that is returned to vessel 16 through conduit 38 is efficiently dispersed within slurry 22 in vessel 16 by the internal circulation within vessel 16. Thus both inter-vessel and intra-vessel circulation occur so as to better disperse the reactants being added to the slurries and to reduce temperature gradients within the vessels due to heating and cooling. This circulation system permits rapid and easy plant control and the negative sulphate level in the dissolver acts like a buffer to absorb inadvertent sulphate concentration increases in the crystallizer.

The rate at which said slurry is circulated within the first and second reaction vessels is preferably at least equal about 50% of the volume of the slurry in the first reaction vessel per minute, preferably from about 50% to about 150% and most preferably about 100%. This circulation thoroughly disperses the phosphate rock-phosphoric acid mixture within the slurries.

The residence time of the solids in the first reaction vessel is from about 2.0 hours to about 5.0 hours preferably from about 2.5 hours to about 4.5 hours. Residence time of the solids in the second reaction vessel is from about 0.6 hours to about 2.0 hours, preferably from about 0.7 hours to about 1.6 hours.

A portion of slurry 33 about equal to the amount of reactants added (phosphoric acid, phosphate rock and sulphuric acid), minus the amount of water and volatiles removed from the system is removed from vessel 28 through conduit 40. Samples for analysis of the second slurry are removed from sample port 42 located on conduit 40. The slurry is pumped by a pump 35 from a rock box 44 (Figure 1) and/a diversion or splitter box 44a from which it flows to via a line 40b to a fourth, filter feed, vessel 48 through conduit 46, agitator 50 maintaining the slurry in a dispersed condition in vessel 48.

The splitter box 44a is a device arranged to provide a sufficient liquid head to provide a vacuum seal and a break in the line to prevent siphoning, and comprises a compartmented vessel, usually containing a wire-like partition (that can be fixed or movable), and with an entry line that can be moved to the top of either compartment (for slurry from the crystallizer) and an exit line at the bottom of each compartment, one exit line being for conducting slurry to the filter feed vessel 48 and the other leading to a drain and being used for cleaning the line and the splitter box. Further, the rock box 44 is arranged to trap any relatively large objects, such as rocks, stones and hard pebble-like masses which apparently form upon and break off the sulphuric acid sparger in the crystallizer. The rock box also includes washing means (not shown), e.g. a water line, and discharge means (not shown), e.g. a drain, for removing entrapped particles during a shut down period.

The slurry is pumped by a pump 3a from vessel 48 through conduit 52 to a separation section (not shown in Figure 3 but shown in Figure 1). In start-up, valve 52a can be closed/to direct the slurry through line 3 to ${}^{\text{and valve 3b opened}}$ vessel 2, and, thus, bypass the separation section and provide a fast means of building up the solid level in the slurry without dumping wet pans.

Referring to Figure 1, the separation section comprises a filter 53 to which slurry containing crystalline calcium sulphate and phosphoric acid is conducted via conduit 52 from the filter feed vessel 48. The filter 53 is arranged to filter crystalline calcium sulphate from the slurry, a portion of the filtrate comprising phosphoric acid being recycled to said vessel 2 via conduit 6.

Still referring to Figure 1, it will be noted that line 28a leading from vessel 28 to vacuum pump 28' includes a number of components not shown in Figure 3. In particular, line 28a includes a condenser 28b arranged to condense steam and fluorine compounds, a scrubber 28c arranged to protect the vacuum pump from damage by fluorine compounds, and an entrainment separator or disengager 28d arranged to prevent nongaseous matter, mostly droplets containing fluorides, from entering the vacuum pump.

In normal operation, reactants are continuously added to vessels 16 and 28, while water, volatiles and product slurry are constantly withdrawn from vessel 28. However, in case of a separation apparatus breakdown, for instance, the system can be placed in a recycle condition, no reactants being added to the system, intra-vessel circulation being continued while inter-vessel circulation is discontinued.

It is to be recognised that the elevation of vessels 2, 16, 28, 44 and 48 with respect to each other may be varied without affecting the operation, while the conduits connecting vessels 2, 16, 28, 44 and 48 may be rearranged to meet requirements. For example, slurry 22 passing from vessel 16 to vessel 28 may be introduced into the top part of vessel 28 rather than the bottom part without affecting the process. Further, as indicated in Figure 3, the vessel 16 may be positioned at a higher elevation than the filter feed vessel 48 and include an overflow pipe 26 from the vessel 16 to the vessel 48 for conducting overflow slurry from the vessel 16 by gravity to the vessel 48.

The apparatus conveniently includes a first recirculation conduit 14 connected to conduit 24 for selectively recirculating said first slurry from said vessel 16 externally thereof and back to said vessel by means of the pump 25; a second recirculation conduit 40a and 23b connected to conduit 40 for selectively recirculating said second slurry from said vessel 28 externally thereof and back to said vessel 28, by means of the pump 35; valves 15 and 17 for controlling slurry flow via the conduit 24 from said vessel 16 to the vessel 28 and to said first recirculation conduit 14; and valves 29 and 43 to control the flow of slurry via the conduit 40 to the splitter box 44a and said second recirculation conduit.

0033166

Referring now particularly to Figure 4, the construction of the vessel 16 of the embodiments of Figures 1 and 3 will be described in more detail. The illustrated vessel 16 is of closed construction, the draft tube 20 being mounted within the vessel in a vertical position by means of a series of braces/64 extending between the inner wall 74 of the vessel 16 and the outer wall of the draft tube 20. The draft tube 20 includes an outwardly flared lower skirt portion 66 terminating in the bottom portion of the vessel 16, the inner wall 74 of the vessel adjacent the lower end thereof being downwardly dished, as shown at 16a, adjacent the lower end of the skirt portion 66 of the draft tube 20, the vessel including an outlet in the lower end thereof beneath the draft tube. It will be noted that inlet conduit 12 for introducing a feed slurry to the vessel 16 from vessel 2 includes a substantially vertical lower end portion 12a within the vessel 16, passing through the wall of the draft tube 20 and terminating therewithin the inlet conduit further including a substantially vertical upper end vent portion 5 extending outside and above the vessel 16 to permit escape of gases and thus to reduce foaming generated by reaction in the vessel 16 and having a slurry inlet portion 70 connected at an angle to said portion 5 and leading to said vessel 2 and also leading to vent conduits 1 and 1a, conduit 1a conveniently being used for introducing a treating or defoaming agent into said vent pipe 1.

In the illustrated apparatus, the agitator 21 is positioned in the upper portion of said draft tube 20, alternatively, however, the agitator may be positioned in the lower portion thereof or at an intermediate level. The apparatus further includes overflow pipe 26 extending from the upper end portion of said vessel 16, recycle slurry pipe 38 extending into said vessel and terminating at 38c in the annulus thereof between the outer wall of said draft tube and the inner wall 74 of said vessel, adjacent the lower end portion of said draft tube, and an additional inlet pipe 68 in said vessel for the introduction of steam or a treating or defoaming agent.

Further the vessel 16 includes two sets of air spargers 82 and 83 for introducing fluid, e.g. air, under pressure to the bottom portion of the vessel, conveniently to the lower portion of the draft tube skirt 66, to agitate slurry in the vessel 16 to prevent settling of undissolved solids or to suspend solids on start up of the process or following a shut down.

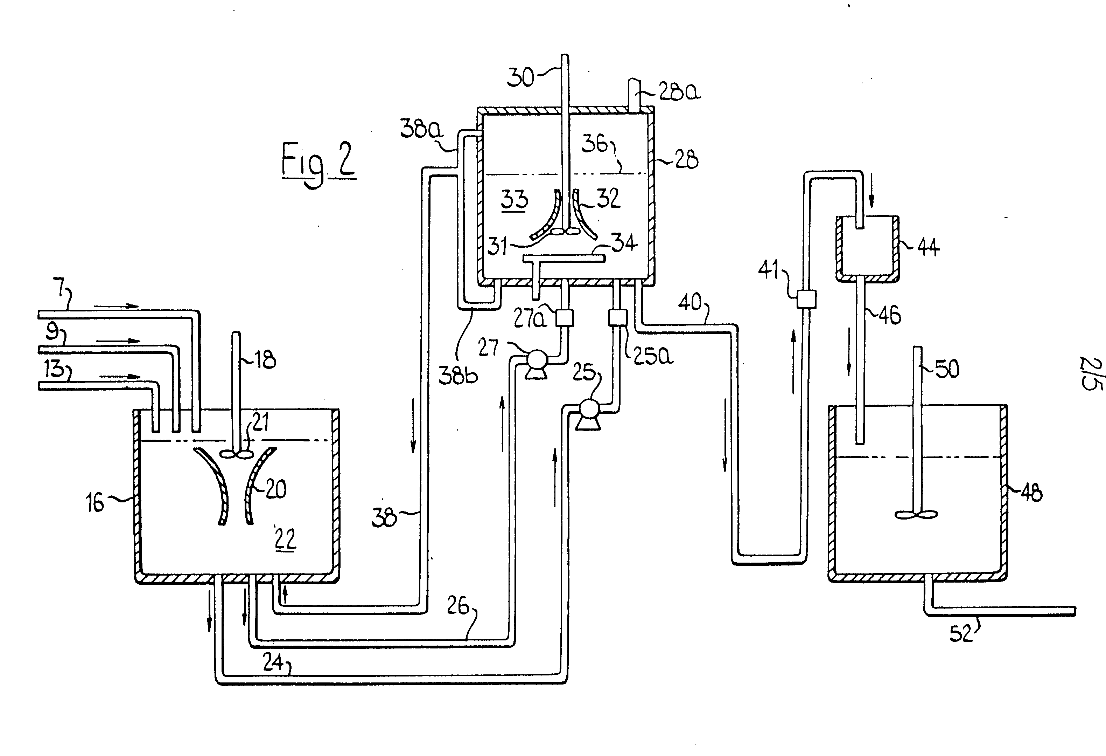

An alternative embodiment is illustrated in Figure 2. In this embodiment, instead of adding the phosphoric acid, phosphate rock and if necessary, the defoamer to a preslurry vessel 2 as shown in the embodiment of Figures 1, 3 and 4, the reactants are added directly to the first slurry 22 in vessel 16. The phosphoric acid is added through conduit 7 and the phosphate rock is added through conduit 9. The reactants are added in amounts such that the direct combination of the two results in a slurry containing between about 30% to about 40% solids by weight and an initial concentration of about 13% to about 47% $P_2O_5$ in the liquid portion of the slurry. Defoamer is added through conduit 13, if, and when needed. Once the reactants are dispersed in the first slurry 22, the parameters such as temperatures, pressures, concentrations and flows are the same as described above for the more preferred embodiment of Figures 1, 3 and 4; however a greater number of air spargers may be required (the air spargers are omitted from Figure 2 in the interest of clarity).

Figure 2 also shows the provision of a second conduit, 26, with pump 27 for returning slurry from vessel 16 to vessel 28, and valves 25a and 27a for controlling the respective flows through the conduits 24 and 26. Further, Figure 2 shows the positioning of the vessel 28 at an elevation relative to rock box 44 and filter feed vessel 48 such that slurry at a level 36 in the vessel 28 may flow gravitationally through conduit 40 under the control of a valve 41.

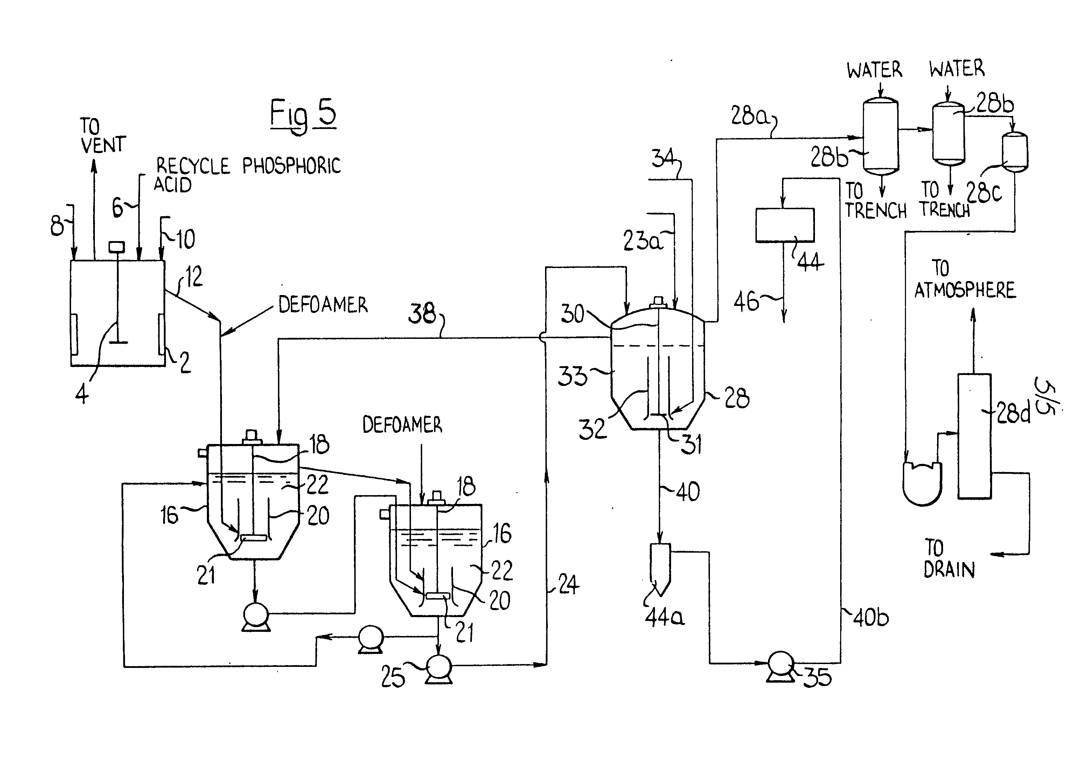

Figure 5 similarly shows an alternative embodiment that resembles that of Figures 1, 3 and 4 very closely, except

19α.

that this embodiment employs two dissolvers 16 in series and connected by suitable conduits and pumps arranged to provide two way circulation between the dissolvers.

ILLUSTRATIVE EXAMPLES

Example 1

Vessels 16 and 28 and the accompanying connective means such as conduits, pumps, etc. of the apparatus of Figures 1, 3 and 4 are filled with a slurry consisting of calcium sulphate hemihydrate, monocalcium phosphate, phosphoric acid and sulphuric acid. The weight percent of the solids in the slurry is about 31%, the specific gravity of the degassed slurry in vessel 28 is about 1.80 g/cc. $P_2O_5$ concentration of the liquid portion of the slurry is about 42% by weight. The temperature of the slurry in vessel 16 is between about 88-102°C preferably between 92°C and 105°C, whereas the temperature in vessel 28 is between 88° and 105°C, preferably 92°C and 105°C. Soluble sulphate concentration in vessel 16 is from about +0.6 to about -7% (preferably 0.0 to -6) and the soluble sulphate concentration in vessel 28 is above 0.0 (preferably from about 0.7% to about +4.5%).

A mixture of phosphate rock (typical analysis shown in Table 2 and a size distribution shown in Table 3), and phosphoric acid is prepared by adding phosphate rock to phosphoric acid in the ratio of about 1647 pounds (747 kg) of phosphate rock (about 31.2% $P_2O_5$ and 45.6% CaO) to about 3700 pounds (1678 kg) of phosphoric acid (about 32% $P_2O_5$). The temperature of the mixture is about 90°C. A tall oil-sulphonic acid defoaming agent (AZ 10A) is added as needed to reduce the foam caused by partial dissolution of the phosphate rock in phosphoric acid.

This phosphate rock-phosphoric acid mixture is added to the first slurry in vessel 16 at the rate of about 380 U.S. gallons (1438 litres)/minute (about 5350 pounds (2427 kg) per minute). The incoming mixture is thoroughly mixed with the first slurry and a first portion of the second slurry from the second reaction vessel. Intra vessel mixing is accomplished by means of the draft tube and the agitator. The first slurry is pumped from the first reaction vessel 16 to the second reaction vessel 28 at the rate of about 1640 U.S. gallons (6207 litres)/minute. The first slurry is thoroughly mixed with the second slurry and 98% sulphuric acid which is added to the second reaction vessel at about 87 U.S. gallons (329 litres)/minute. An organic sulphic acid derivative can be added to the second reaction vessel 28. This material is added to promote the growth of the hemihydrate crystals. The first slurry, the sulphuric acid and the crystal modifier are thoroughly dispersed into the second slurry in the second reaction vessel 28. The second slurry flows at the rate of about 1280 U.S. gallons (4845 litres)/minute from vessel 28 into vessel 16 where it is thoroughly mixed with the first slurry.

About 45 U.S. gallons (170 litres)/minute of water and volatile materials ($HF$, $SiF_4$, $H_2S$, $CO_2$ etc.) is vaporized from the second slurry in vessel 28. Vessel 28 is maintained at about 15 inches (380 mm) of mercury absolute. Approximately 400 U.S. gallons (1514 litres)/minute of slurry is withdrawn from the second reaction vessel and flows to vessel 48, the separator feed tank. Thus about 445 U.S. gallons (1684 litres)/minute of material (vaporized material and the slurry to the separator feed tank) is removed from the system. The removed slurry is then passed to the separation section where the solid and liquid portions of the slurry are separated.

At these rates, the plant will produce about 350 tons (318 tonnes) per day of $P_2O_5$ of 35-44% $P_2O_5$ phosphoric acid.

TOTAL LOSS IN FILTER CAKE

|  | % of $P_2O_5$ fed in rock |
|---|---|
| Citrate isoluble (CI) | 0.76 |
| Citrate soluble* (CS) | 4.64 |
| Water soluble (WS) | 2.34 |
| Total Loss | 7.74 |
| Total recovery | 92.26 |

*Lattice substitution losses determined using ammonium nitrate instead of ammonium citrate solution.

A typical analysis of the phosphoric acid produced by this process is shown in Table 4. The total residence time, from entering vessel 16 to exiting vessel 48, is calculated at 7.9 hours. The volume of vessel 16 is about 120,000 U.S. gallons ($455m^3$) the volume of vessel 28 is about 40,000 U.S. gallons ($152m^3$) to normal liquid level.

Phosphate rock is present in the first and in the second slurries in the first and second reaction vessels respectively. The amount present is quite small and will vary considerably. The value for the "Citrate Insoluble" loss of the filter cake is a rough measure of undissolved and unreacted phosphate rock.

The total sulphate value added to the system is the sum of the sulphate values added as sulphuric acid plus the sulphate values entering the system in the rock. Table 1 is a compilation of sulphuric acid usage for five measurement periods.

Examples 2 to 7

The following system as described hereinafter was set up in a pilot plant to duplicate actual plant operation in order to investigate the effect of defoamers and crystal modifiers on the filterability, and hence the crystal size, of the calcium sulphate hemihydrate produced.

Into a first reaction vessel containing reaction slurry was added phosphate rock, recycled phosphoric acid and recycle reaction slurry from the second reaction vessel. Defoamer, when used, was added in the first reaction vessel. The reaction slurry so formed in the first reaction vessel was circulated to the second reaction vessel. Sulphuric acid and crystal modifiers were added to the second reaction slurry. The second reaction vessel was maintained under slight vacuum so as to remove gaseous impurities and water from the slurry. The evaporation of water was utilised to cool the reaction slurry.

The conditions employed in determining the utility of the crystal modifier and the defoamer in early runs and later runs are shown below in Table 5. Results of the tests from the later runs are shown in Table 6.

Phosphate rock is present in the first and in the second slurries in the first and second reaction vessels respectively. The amount present is quite small and will vary considerably. The value for the "Citrate Insoluble" loss of the filter cake is a rough measure of undissolved and unreacted phosphate rock.

Example 8

A hemihydrate system substantially as shown in Figures 1, 3 and 4 and operated substantially as described in Example 1 was discovered to be wasteful of product acid on start-up, that is, the first one or two days of production could not be economically flitered due to fine particles in the feed to the filter and had to be "dumped wet" with a resulting high loss of $P_2O_5$ values.

In a modified start-up procedure, the system was first filled with water heated by steam to $210^\circ$F ($99^\circ$C). This preheated the vessels while testing the equipment at temperature. The system was drained of water and filled through the evaporators with $185^\circ$F ($85^\circ$C) 31% $P_2O_5$ acid. After the crystallizer and dissolver were filled with acid, phosphate rock was then fed to the system. The fluid was recycled from the filter feed tank to the reslurry tank until the solids were builtup to about 30%. The sulphates were adjusted continuously to the proper level by adding sulphuric acid to the crystallizer (e.g. negative in the dissolver and positive in the crystallizer). After the solids were at the proper level, slurry was then sent to the filter. The plant was started up at 150 tons (136 tonnes) day feed rate. The filter was lined out within two hours of startup (i.e. no wet pans after two hours). Within 48 hours the design rate of 350 tons (318 tonnes) day was achieved with no apparent problems. Product acid strength was up to 40% $P_2O_5$ within one shift. The recycling of the acid slurry allowed all the precipatate to convert to hemihdrate from dihydrate that was formed at the beginning of the startup. This allowed a more filterable precipatate to be formed.

After the completion of a 44 day plant test and several modifications to the dissolver, the plant was again started up. Essentially the same startup procedure was used except the system was not preheated with hot water and 35% acid @ 185°F (85°C) was used in the charging of the system. The startup went very smoothly with no particular problems, although the filling of the system was slowed by evaporator problems. The first hemihydrate cake that was produced filtered well. No filter pans were dumped wet during startup.

Upon completion of the plant trial runs in this Example 8, the average parameters in Table 7 were calculated from data gathered over the entire course of the runs.

TABLE 1

| Rock Fed, TPD | CaO in Rock, % | $SO_4$ in Rock % | CaO Fed, TPD | Stoichiometric Sulphate $(SO_4^=)$ for CaO in Rock TPD | Sulphate Present in 100% $H_2SO_4$ Fed to Unit TPD | Sulphate Equival-ent in Rock, TPD | Total Sulphate Used, TPD | Total $SO_4^=$ used as a fraction of Stoichiometric Amount |
|---|---|---|---|---|---|---|---|---|
| 1209.5 | 44.90 | 0.65 | 543.07 | 930.97 | 844.4 | 7.86 | 852.26 | 0.915 |
| 1383.1 | 45.97 | 0.65 | 635.81 | 1089.4 | 1052.2 | 8.99 | 1061.2 | 0.974 |
| 1381.6 | 46.76 | 0.65 | 646.04 | 1107.5 | 1024.7 | 8.98 | 1033.7 | 0.933 |
| 1172.2 | 46.81 | 0.65 | 548.71 | 940.64 | 844.3 | 7.62 | 851.9 | 0.906 |
| 1110.9 | 46.89 | 0.65 | 520.90 | 892.97 | 804.6 | 7.22 | 811.82 | 0.909 |

## TABLE 2

### Typical Phosphate Rock Analysis

| Compound | For Example 1 % By Weight | For Example 8 % By Weight |
|---|---|---|
| $P_2O_5$ | 31.2 | 32.15 |
| CaO | 45.6 | 46.81 |
| $Fe_2O_3$ | 1.4 | 0.79 |
| $Al_2O_3$ | 1.2 | 1.12 |
| MgO | 0.4 | 0.37 |
| $SiO_2$ | 8.7 | 4.6 |
| F | 3.7 | 3.59 |
| $SO_3$ | 0.9 | |
| $CO_2$ | 3.6 | |
| Organic | 1.8 | |
| $H_2O$ | 1.1 | 2.08 |
| $Na_2O$, $K_2O$ | 0.4 | |
| $SO_4$ | | 0.79 |

27

### Table 3

**Typical Phosphate Rock Screen Analysis**

| Mesh (U.S.Standard) | Cumulative Percent |
|---|---|
| +14 | 0.4 |
| +24 | 2.6 |
| +28 | 9.3 |
| +35 | 26.6 |
| +48 | 64.1 |
| +65 | 86.4 |
| +100 | 97.7 |
| -100 | 2.3 |

### Table 4

**Typical Phosphoric Acid Analysis (Weight percent)**

| | Example 1 | Example 8 |
|---|---|---|
| $P_2O_5$ | 37.95 | 41.77 |
| $SO_4^=$ | 1.72 | 2.41 |
| CaO | 1.04 | 0.23 |
| $F^-$ | 1.27 | 1.22 |
| MgO | 0.46 | 0.51 |
| $Fe_2O_3$ | 0.97 | 0.97 |
| $Al_2O_3$ | 0.91 | 0.84 |
| Solids | | 0.78 |
| Sp. Gr. | | 1.517 |

TABLE 5
GENERAL REACTION CONDITIONS
(Pilot Plant)

| | Early Runs | Later Runs |
|---|---|---|
| Slurry Density | 1.72 g/cc | 1.72 |
| Sulphate Concentration* | | |
| First Reaction Vessel | -2% | -2 |
| Second Reaction Vessel | +2% | +2 |
| Phosphate Rock Feed Rate | 174 U.S. gallons (6584 litres) /min. | 174 |
| Slurry Recycle From Second To First Reaction Vessel | 2200 U.S. gallons (8325 litres) /min. | 2200 |
| Recycle Phosphoric Acid Feed Rate To First Reaction Vessel | 390 U.S. gallons (1475 litres) /min. | 390 |
| Sulphuric acid (93%) Feed Rate To Second Reaction Vessel | 150 U.S. gallons (567 litres) /min. | 150 |
| Defoamer Feed Rate To First Reaction Vessel | 0.7 - 1.1 U.S. gallons (2.6 - 4.1 litres)/min. | 0.25 - 0.76 U.S. gallons (0.9 - 2.8 litres)/min. |
| Crystal Modifier (CM) Feed Rate To Second Reaction Vessel (1% Soln of CM in Water) | 0.1 - 0.4 U.S. gallons (0.4 - 1.5 litres)/min. | 0.006 - 0.76 U.S. gallons (0.02 - 2.8 litres)/min. |
| Temperature of Slurry In Both Reaction Vessels | 195-205$^{o}$F (90-96$^{o}$C) | |
| 50% Mass Dominant Crystal Size | 30-40 | 26-43 |

* By titration method

28

0033166

TABLE 6

| Example | Defoamer Type | Amount Wt. % | Crystal Modifier | | Filter Rate** TON $P_2O_5/ft^2$-day | Calcium Sulphate Hemihydrate 50% Mass Dominant Crystal Size (microns) |
|---|---|---|---|---|---|---|
| | | | Type | Amount ppm* | | |
| 1 | None | None | None | None | 0.35 to 0.42 | 42.8 |
| 2 | None | None | None | None | 0.70 | 39.1 |
| 3 | None | None | Actrasol W-40 | 0.1 | 0.85 | 42.8 |
| 4 | AZ10A | 0.071 | Actrasol W-40 | 10.8 | 1.24 | — |
| 5 | AZ10A | 0.12 | Actrasol W-40 | 12.3 | 1.72 | — |
| 6 | AZ10A | 0.058 | None | None | 0.80 | 35 |
| 7 | AZ10A | 0.061 | Actrasol W-40 | 12.2 | 0.70 | 35 |
| 8 | AZ10A | 0.037 | Actrasol W-40 | 10.0 | 0.45 | 26 |

Actrasol W-40 - primarily sodium dodecylsulphonate, Arthur C. Trask Corp., Summit. Ill. 60501

AZ10A - Tall oil fatty acids and esters*, AZ Products Co., P.O. Box 67, Eaton Park, Florida 33840

*AZ Defoamer 10-A is a proprietary blend of tall oil fatty acid and a variety of surfactants.

* Based on weight of slurry

** 15 in Hg, 1-1/4" coke thickness, wash to dry solids 1.02, 33% solids in slurry, 40 to 44% $P_2O_5$

Table 7

Run Average

| | |
|---|---|
| Temperature in Dissolver - °C | 94-98 |
| Amount SO$_4$ Added<br>Stoichiometric H$_2$SO$_4$* | 0.96-0.97 |
| % P$_2$O$_5$ in Product from<br>Crystallizer | 44 |
| Temperature in Crystallizer - °C | 98-101 |
| Reactor Volume First Stage<br>Reactor Volume Second Stage | 2.87** |

*Amount H$_2$SO$_4$ required to convert
 Ca in Feed to Dissolver to
 Calcium Sulphate including SO$_4$ in Rock

CLAIMS:

1. Apparatus for reacting or dissolving a particulate solid and a liquid, which apparatus comprises a closed vessel, a draft tube mounted in a vertical position within said vessel, an agitator positioned within said draft tube, and an inlet for introducing a feed slurry into said vessel, characterised by a vent pipe connected to said inlet to reduce foaming generated by reaction in said vessel and to prevent blockage of or increase flow through said inlet.

2. Apparatus according to Claim 1, further characterised in that said draft tube has an outwardly flared lower skirt portion terminating in said bottom portion of the vessel.

3. Apparatus according to Claim 2, further characterised in that the lower end wall of said vessel is downwardly dished adjacent to the lower end of said draft tube.

4. Apparatus according to any one of Claims 1, 2 or 3, further characterised in that said agitator is mounted on a shaft extending axially of said vessel.

5. Apparatus according to any one of Claims 1 to 4, further characterised in that said inlet comprises a conduit the lower end of which terminates within said draft tube.

6. Apparatus according to any one of the preceding Claims, further characterised in that said inlet comprises a conduit having an elongate portion extending downwardly within said vessel, an upper vent portion disposed externally of the vessel and an inlet portion connected to said upper portion and through which slurry is fed.

7. Apparatus according to Claim 6, further characterised in that said elongate portion and said upper vent portion of the conduit both extend substantially vertically, said inlet portion being connected at an angle to said upper portion.

8. Apparatus according to any one of the preceding Claims, further characterised in that said agitator is located in an upper portion of said draft tube.

9. Apparatus according to any one of the preceding Claims, further characterised in that the lower end portion of said inlet terminates in said draft tube below said agitator.

10. Apparatus according to any one of the preceding Claims, further characterised in that said vessel has an outlet in the lower end wall thereof below said draft tube.

11. Apparatus according to any one of the preceding Claims, further characterised by an overflow pipe extending from an upper portion of said vessel, and a recycle slurry pipe extending into said vessel and terminating between the outer wall of said draft tube and the inner wall of said vessel, adjacent the lower end portion of said draft tube.

12. Apparatus according to any one of the preceding Claims, further characterised by a further inlet for introducing a treating or defoaming agent into said vessel.

13. Apparatus according to any one of the preceding Claims, further characterised in that said vessel comprises a first vessel in a multi vessel apparatus for the preparation of phosphoric acid by the wet process and in which slurry is continuously circulated between and within said vessels.

14. Apparatus for the preparation of phosphoric acid from phosphate rock and sulphuric acid, comprising first and second reaction vessels, each of the vessels having an agitator positioned within a respective upright draft tube mounted within each respective vessel, characterised by an inlet for introducing reactants comprising phosphate rock and phosphoric acid to the first reaction vessel, the inlet including vent means to permit escape of gases from the first reaction vessel and to reduce foaming generated by reaction in the first reaction vessel, means for introducing sulphuric acid into the second reaction vessel, means for maintaining continuous circulation of slurry between the first and second reaction vessels, and means for withdrawing a slurry containing phosphoric acid and calcium sulphate from the second reaction vessel.

15. Apparatus according to Claim 14, further characterised in that the agitator is arranged to continuously circulate slurry within each of the vessels so that the slurry flows from a bottom portion of the respective draft tube, up through the draft tube and downwardly in the space between the draft tube and the adjacent inner wall of the vessel.

16. Apparatus according to any preceding Claim further characterised in that the agitator comprises a propeller mounted on a shaft that extends coaxially with the draft tube.

17. Apparatus according to Claim 15, further characterised in that said inlet comprises a pipe that communicates with the interior of the draft tube in said first reaction vessels.

18. Apparatus according to any one of Claims 14 to 17 further characterised by means for applying a vacuum to said second reaction vessel to permit control of temperature in said second reaction vessel and to permit the formation of a vacuum seal between said first and second reaction vessels.

19. Apparatus according to any one of Claims 14 to 18, further characterised by a third, reslurry, vessel for reslurrying phosphate rock and recycle phosphoric acid, and means interconnecting said third vessel with said inlet to said first reaction vessel.

20. Apparatus according to Claim 19, further characterised in that said first vessel is a dissolver vessel for dissolving phosphate rock in said first slurry, said second reaction vessel being cooled by evaporation and functioning as a crystallizer vessel for crystallising calcium sulphate in said second slurry, the apparatus including a fourth, filter feed, vessel, means for conducting slurry withdrawn from said second reaction vessel to said fourth vessel, and an agitator in said fourth, filter feed, vessel for maintaining the slurry therein in suspension.

21. Apparatus according to Claim 20, further characterised by a surge tank in said means for conducting slurry withdrawn from said second reaction vessel to said fourth vessel.

22. Apparatus according to Claim 20 or 21, further characterised by means for conducting slurry from said fourth, filter feed, vessel to filter means arranged to filter crystalline calcium sulphate from said slurry, and means for conducting filtrate containing phosphoric acid from said filter means to said third vessel.

23. Apparatus according to Claim 20, 21 or 22, further characterised by a rock box in said means for conducting slurry withdrawn from said second reaction vessel to said fourth vessel for trapping relatively large rocks, stones and other objects in said slurry.

24. Apparatus according to any one of Claims 20 to 23, further characterised in that said first dissolver vessel is positioned at an elevation higher than said fourth, filter feed, vessel and including an overflow pipe from said first vessel to said fourth vessel for conducting overflow slurry from said first vessel by gravity to said fourth vessel.

25. Apparatus according to any one of Claims 14 to 24, further characterised in that said second reaction vessel is positioned at an elevation higher than said first reaction vessel, and by an overflow conduit permitting flow of said second slurry from said second vessel by gravity through said overflow conduit to said first slurry in said first vessel.

26. Apparatus according to any one of Claims 14 to 25, further characterised in that said means for introducing sulphuric acid into said second vessel comprise an inlet connected to a sparger.

27. Apparatus according to any one of Claims 14 to 26, further characterised by a first recirculation conduit for selectively recirculating said first slurry from said first vessel, a first pump in said first recirculation conduit, a second recirculation conduit for selectively recirculating said second slurry from said second vessel externally thereof and back to said second vessel, a second pump in said second recirculation conduit, and valve means for discontinuing slurry flow in a first conduit from said first vessel to said second vessel during recirculation of slurry through said first recirculation conduit or during recirculation of slurry through said second recirculation conduit.

28.    A process for the preparation of phoshoric acid from phosphate rock and sulphuric acid, comprising adding phosphate rock and phosphoric acid to a first reaction vessel containing a first slurry comprising calcium sulphate, monocalcium phosphate and phosphoric acid, whereby the added phosphate rock is substantially converted to monocalcium phosphate calcium sulphate and phosphoric acid, continually circulating the first slurry within the first reaction vessel by means of a mechanical agitator disposed within a draft tube, adding sulphuric acid to react with the monocalcium phosphate to form calcium sulphate and phosphoric acid, and separating at least a portion of the product so formed into a liquid component comprising phosphoric acid and a solid component comprising calcium sulphate, characterised in that gases are permitted to escape from the first reaction vessel through venting means thereby reducing forming generated by reaction in the first vessel, in that a portion of the first slurry from the first vessel is continually transferred from the first vessel to a second reaction vessel containing a second slurry comprising calcium sulphate, monocalcium phosphate, sulphuric acid and phosphoric acid, in that the sulphuric acid is added to the second vessel and continuous circulation is maintained of the second slurry within the second vessel, and in that a portion of the slurry in the second vessel is continually transferred from the second vessel to the first vessel.

29.    A process for the production of phosphoric acid according to Claim 28, further characterised by the initial steps of substantially filling at least first and second vessels with phosphoric acid at a temperature in the range of $165^{\circ}C$ to $215^{\circ}F$ ($74^{\circ}C$ to $102^{\circ}C$) and having a $P_2O_5$ analysis in the range of about 28% to about 38% by weight;  circulating a portion of said acid from said first vessel to said second vessel;  feeding phosphate rock to a third vessel that communicates with said first reaction vessel;  cycling fluid from said first and second vessels to a fourth vessel as the volume of the fluid increases by reaction and foam formation;  recycling said fluid from said fourth vessel to said third vessel;  adding sulphuric acid to said second vessel to cause precipitation of calcium sulphate whereby the phosphoric acid strength is increased to within the range about 36% to about 42% $P_2O_5$ by weight and the solids content in said slurry is in the range of about 25% to 35%, transporting said slurry from the second vessel and containing in the range of 25% to 35% solids to a separation section where phosphoric acid is separated from the calcium sulphate; and recycling a portion of said separated phosphoric acid to said third vessel.

30.    A process according to Claim 29, further characterised in that second reaction vessel is maintained under vacuum to effect temperature control in said second reaction vessel and to form a vacuum seal between said first and second reaction vessels.

31.    A process according to Claim 29 or 30, further characterised in that the soluble sulphate content of the slurry in the first vessel is maintained at a negative level and the soluble sulphate content of the slurry in the second vessel is maintained at a positive level.

32.    A process according to Claim 31, further characterised in that the soluble sulphate content of the slurry in the first vessel is controlled by regulation of the addition of sulphuric acid to said second vessel and/or the rate of addition of phosphate rock to said third vessel and/or the recycling of slurry between the second and first vessels.

33.    A process according to any one of Claims 28 to 32, wherein the vessels are at least partly filled with hot water and the water is then removed prior to substantially filling said vessels with phosphoric acid.

34.    A process according to any one of Claims 29 to 33, further characterised in that the phosphoric acid is heated by substantially filling said first, second and third vessels with phosphoric acid at a temperature below about $165^{\circ}F$ ($74^{\circ}C$) and a $P_2O_5$ content greater than about 38% by weight and then introducing sufficient steam into at least one said vessel to cause said phosphoric acid to reach a temperature in the range of $165^{\circ}F$ to $215^{\circ}F$ ($74^{\circ}C$ to $102^{\circ}C$) and, by dilution from the condensed steam, a $P_2O_5$ analysis of at least 28% by weight.

35.    A process according to Claim 34, further characterised in that steam is introduced into said first vessel.

36. A process according to any one of Claims 32 to 35, further characterised in that prior to said addition of phosphate rock to the third vessel, sufficient phosphoric acid is added to said fourth vessel to permit a pump to operate.

37. A process according to any one of Claims 29 to 36, further characterised in that the temperature of the slurry is allowed to increase by the effect of heat generated by the reaction of sulphuric acid with monocalcium phosphate to a temperature in the range about $200^{\circ}F$ to $215^{\circ}F$ ($93^{\circ}C$ to $102^{\circ}C$), and then the temperature in said second vessel is maintained in the range about $202^{\circ}F$ to $210^{\circ}F$ ($94^{\circ}C$ to $99^{\circ}C$) by applying vacuum to said second vessel.

38. A process according to any one of Claims 28 to 37, further characterised in that a defoaming agent is introduced to the first reaction vessel.

Fig 1

28c

28' 28d

44a

46

28b

28a

TO DRAIN

40b

34

32
33
31
28

30 23a

44 44 40

35

38

18

20
21
16
22

24

25

10 8

11 2
4

12

6

PRODUCT H₃PO₄

WASH WATER

53

52

52

52

48
50

3a

3

52

CaSO₄·½H₂O FILTER CAKE

0033166

Fig 2

Fig 3

Fig 4

Fig 5